(19) Europäisches Patentamt
European Patent Office
Office européen des brevets

(11) Publication number: 0 009 268 B1

# (12) EUROPEAN PATENT SPECIFICATION

(45) Date of publication of patent specification: 01.12.82

(51) Int. Cl.[3]: C 08 K 5/14, C 08 J 3/24, H 01 B 3/44

(21) Application number: 79200459.0

(22) Date of filing: 17.08.79

## (54) Process for cross-linking shaped non-polar synthetic resins and electric objects insulated with said crosslinked resins.

(30) Priority: 31.08.78 NL 7808931

(43) Date of publication of application: 02.04.80 Bulletin 80/7

(45) Publication of the grant of the patent: 01.12.82 Bulletin 82/48

(84) Designated Contracting States: AT BE CH DE FR GB IT NL SE

(56) References cited:
GB - A - 956 808
GB - A - 1 182 703
GB - A - 1 267 868
GB - A - 1 276 758
GB - A - 2 013 213
US - A - 3 654 315

(73) Proprietor: Akzo N.V.
Velperweg 76
NL-6824 BM Arnhem (NL)

(72) Inventor: Van Drumpt, Jan Dirk
Keizer Karellaan 61
NL-7415 ZD Deventer (NL)

(74) Representative: Sieders, René et al,
P.O. Box 314
NL-6800 AH Arnhem (NL)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 009 268 B1

# Process for cross-linking shaped non-polar synthetic resins and electric objects insulated with said crosslinked resins

The invention relates to a process for cross-linking shaped non-polar synthetic resins by bringing them in a high frequency alternating current field in the presence of a polar peroxide and in the absence of a polar auxiliary substance.

A process of the type indicated above is known from the German Patent Application DE—OS 2 611 349. According to the process described in said publication use is made of compounds that are unstable in a high frequency alternating current field, such as peroxides and azo compounds which are sufficiently polar to decompose into radicals in a high frequency alternating field or, if they are not unstable, do decompose into radicals in the presence of an auxiliary substance which does get activated by the alternating current field. In the publication no specific peroxides, azo compounds or auxiliary substances are mentioned. The applicant has found that in the absence of an auxiliary substance which in itself is undesirable, acceptable results can be obtained only with the use of very special polar peroxides, other polar peroxides being unsuitable for use in actual practice. Polarity is a necessity but by no means the only requirement. Not only the symmetrical peroxides such as dicumyl peroxide and ditertiary butyl peroxide are, as was to be expected, inactive, but there are also polar peroxides which do not give satisfactory results. Their use, even in relatively large amounts, leads to the following polar peroxides not being cross-linked at all or only to a quite insufficient degree:

tert. butyl hydroperoxide;
tert. butyl cumyl peroxide;
cumene hydroperoxide;
mono tert. butylperoxy-maleinate;
4-tert. butylperoxy-4-methyl-2-pentanone;
cumylperoxy-trimethyl silane;
tert. butylperoxy-stearyl carbonate
tert. butylperoxy-cetyl carbonate;
2,2-bis cumylperoxy-propane;
2,2-bis (4,4-di-t. butylperoxy-cyclohexyl)propane;
1-ethyl carboxymethylene-1,4,4',7,7'-pentamethyl-2,3,8,9-tetraoxacyclononane.

Other polar peroxides do result in cross-linking, but they are unfit for use in that they become active during the initial shaping stage and cause the polymer to be cross-linked before it is in its final form, so that it becomes unprocessable (scorching).

Examples thereof include:
tert. butylperoxy-p.methoxybenzoate;
tert. butylperoxy-(2,2-diethyl acetate);
tert. butylperoxy-2-ethyl hexanoate;
cumylperoxy-hexahydrobenzoate;
dicumylperoxy-hexahydroterephthalate;
tert. butylperoxy-pivalate.

There are also polar peroxides which during the cross-linking reaction emit quite an amount of gas, which is occluded in the material so that it becomes unsuitable for electrical insulation purposes. Examples thereof include:
tert. butylperoxy-(2,2 diethyl) acetate;
cumyl perbenzoate;
cumyl percaprylate.

It has now been found that with the use of a process of the type indicated above as known favourable results are obtained if as peroxide there is used a compound selected from the following group:

A: peresters of the general formula

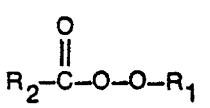 , 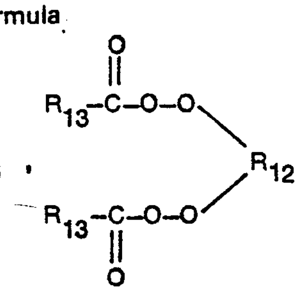 or 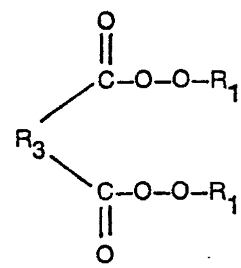

(1) (1a) (2)

B: perketals of the general formula

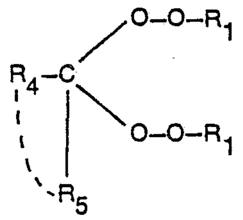

or

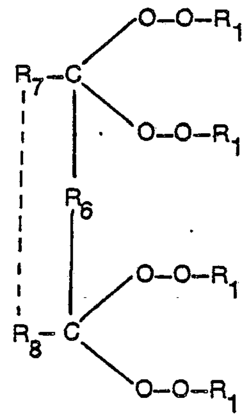

(3)

(4)

C: peroxides of the general formula

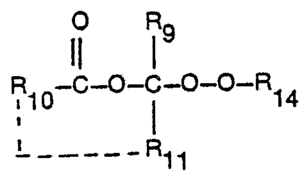

(5)

where the letters R have the following meaning:

$R_1$: a tertiary alkyl group having 4—12 carbon atoms;

$R_2$: a primary alkyl group having 1—12 carbon atoms, an aryl group having 7—12 carbon atoms and substituted with one or more methyl groups;

$R_3$: a primary alkylene group having 1—12 carbon atoms, a vinylidene group or a phenylene group;

$R_4$ and $R_5$: primary alkyl groups having 1—12 carbon atoms or when taken together and linked with the adjacent carbon atom they form part of a cyclopentamethylene group or cyclohexamethylene group which may or may not be methyl-substituted;

$R_6$: a diprimary alkylene group having 1—12 carbon atoms or linked with the two adjacent carbon atoms and in combination with $R_7$ and $R_8$ it forms part of a cyclopentamethylene group or cyclohexamethylene group which may or may not be methyl-substituted;

$R_7$ and $R_8$: primary alkyl groups having 1—12 carbon atoms or when taken together and linked with the respective adjacent carbon atoms and in combination with $R_6$ they form part of a cyclopentamethylene group or cyclohexamethylene group which may or may not be methyl-substituted;

$R_9$: a methyl or phenyl group;

$R_{10}$ and $R_{11}$: primary alkyl groups having 1—12 carbon atoms, cyclopentyl groups or cyclohexyl groups, aryl groups or when taken together and linked with the adjacent

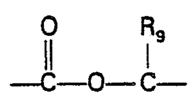

group they form part of a substituted or unsubstituted ring system having 5 or 6 atoms in the ring;

$R_{12}$: a ditert. alkylene group having 8—12 carbon atoms;

$R_{13}$: a primary alkyl group having 1—12 carbon atoms, a phenyl group or an aryl group having 7—12 carbon atoms and substituted with one or more methyl groups.

$R_{14}$: a tertiary alkyl group having 4—12 carbon atoms or a tertiary aralkyl group having 7—12 carbon atoms.

If use is made of these peroxides, the above drawbacks are not met and products having excellent properties are obtained.

The process according to the invention is specially of importance for the manufacture of insulated

electric objects, more particularly electric wires.

Electric conductors are generally insulated with polymers and copolymers of olefins such as ethylene. Because of their non-polar character these polymers are very suitable to be used as electric insulating material, but they do not readily cross-link in a high frequency alternating current field in the presence of the usual radical initiators because the polymer itself is not heated by the field. For that reason, as appears from the Netherlands Patent Application NL 274 239 and the German Patent Application DE—OS 2 611 349, polar substances (such as carbon black) which absorb energy from the high frequency alternating current field are sometimes added to these polymers, which substances heat the polymer and thus indirectly activate the radical initiators. In that way the polymers are in fact artificially polarized, which is inadmissible for electrical insulation purposes in the intermediate and in the high voltage range.

In practice, for the purpose of cross-linking the polymers, electric objects such as cables insulated with such polymers are, upon being shaped, heated to a temperature at which the radical initiators present in the polymer are activated and hence caused to bring about cross-linking. To that end the cables are passed through very long ovens in which they are heated to the desired temperature with the aid of steam or nitrogen under pressure. This method of cross-linking not only has the disadvantage that it is costly due to the very intricate technology, but also the cables becoming damp when use is made of steam, is considered a great drawback. Moreover, there is the side effect then of the formation of closed voids. In the process according to the invention the polymer provided with a coating (containing the peroxide) is passed through ovens in which a high frequency alternating current field is maintained by which the polymer is cross-linked. The length of these ovens is far shorter than that of the ones that are commonly employed. The electrical properties of the products according to the invention compare with those of the best products obtained by the prior art processes. A particularly suitable compound is di-tert. butyl peroxy terephthalate (formula 8). Also very suitable are compounds having the general formula (5) of the formula sheet, such as 2-methyl-2 cumylperoxy-5-ketotetra-hydrofuran (formula 7) and 3-phenyl-3-tert. butylperoxy-phthalide (formula 6). These compounds and their method of preparation are described in US 3,654,315.

The amount of polar peroxide to be used may vary between wide limits. In general, excellent results are obtained with an amount of 5 per cent by weight, although often good results may be obtained with the use of smaller amounts. High frequency alternating current fields are known in the art and the apparatus for creating them is commercially available. The frequency of a suitable field may be for instance: 434, 915 or 2450 Mhz.

The process according to the invention also may be successfully applied to non-electrical objects.

The process offers particular advantages for objects having a high wall thickness because in that case heating methods other than by high frequency give rise to non-homogeneous rises in temperature in the object.

Besides the process described, the invention comprises the products obtained with it.

The invention will be further described in the following examples.

## Examples 1—23

On a two-roll mill the peroxide used was mixed with polyethylene powder (Alkathene 017040, registered trade mark of ICI) at a temperature of 120°C. Of this mixture 200 grammes were immediately afterwards exposed for 5 minutes to high frequency radiation of 2450 Mhz (1000 W). In all cases the degree of cross-linking was measured both before and after radiation by extraction for 6 hours with boiling xylene. The results are given as the weight fraction of non-extracted (= cross-linked) polymer (gel fraction). Results acceptable for practical purposes are obtained if more than about 60% of the material is not extracted.

In this way the following peroxides were examined for their effectiveness. In brackets are mentioned for a number of peroxides the trade name under which the product is marketed by Akzo Chemie b.v. and their representative general formula of the formula sheet.

1. dicumyl peroxide (Perkadox SB);
2. tert. butyl cumyl peroxide (Trigonox T);
3. tert. butyl hydroperoxide (Trigonox A);
4. cumyl hydroperoxide (Trigonox K);
5. tert. butylperoxy-(p. methoxy) benzoate;
6. tert. butylperoxy-(2,2-diethyl acetate) (Trigonox 27);
7. cumyl perbenzoate;
8. cumyl percaprylate;
9. 2,2-bis (4,4-di-tert. butylperoxy-cyclohexyl) propane (Perkadox 12);
10. 2,2-biscumylperoxy-propane;
11. tert. butylperoxy-stearyl carbonate;
12. tert. butylperoxy cetyl carbonate;
13. mono-tert. butylperoxy-maleinate;
14. 1-ethyl carbomethylene-1,4,4',7,7'-pentamethyl-2,3,8,9-tetraoxacyclononane;

15. 4-tert. butylperoxy-4-methyl pentanone-2;
16. 2,5-di-tert. butylperoxy-2,5-dimethyl-tetrahydrofuran;
17. cumylperoxy-trimethylsilan;
18. tert. butylperoxy-3,5,5-trimethyl hexanoate (Trigonox 42S, formula 1);
19. 2,5-dibenzoylperoxy-2,5-dimethyl hexane (formula 1a);
20. di-tert. butylperoxy terephthalate (formula 2 and 8);
21. 1,1-di-t-butyl peroxy-3,5,5-trimethyl-cyclohexane (Trigonox 29, formula 3);
22. 2-methyl 2-cumyl peroxy 5-ketotetrahydrofuran (formula 5 and 7);
23. 3-tert. butylperoxy-3-phenylphthalide (formula 5 and 6).

The results are given in the following table. In all cases the amount of peroxide was 5% by weight. Experiments leading to results which were *un*acceptable for practical purposes.

TABLE I

| Experiments with peroxide | gel fraction (%) before radiation | gel fraction (%) after radiation | Observations |
|---|---|---|---|
| 1 | 0 | 0 | no cross-linking |
| 2 | 0 | 0 | " |
| 3 | 0 | 0 | " |
| 4 | 0 | 0 | " |
| 5 | 45 | 95 | cross-linking even before radiation |
| 6 | 40 | 40 | cross-linking and occlusion of gas bubbles even before radiation |
| 7 | 0 | 73 | much occlusion of gas |
| 8 | 0 | 54 | occlusion of gas and insufficient cross-linking |
| 9 | 0 | 8 | hardly any cross-linking |
| 10 | 0 | 0 | no cross-linking |
| 11 | 0 | 16 | insufficient cross-linking |
| 12 | 0 | 29 | " |

TABLE II

| Experiments with peroxide | results |
|---|---|
| 13 | hardly any cross-linking |
| 14 | no cross-linking |
| 15 | hardly any cross-linking |
| 16 | too little cross-linking |
| 17 | no cross-linking |

Experiments according to the invention leading to results acceptable for practical purposes.

TABLE III

| Experiments with peroxide | gel fraction (%) before radiation | gel fraction (%) after radiation | Observations |
|---|---|---|---|
| 18 | 0 | 70 | |
| 19 | ~0 | 65 | |
| 20 | 0 | 95 | over curing |
| 21 | 0 | 60 | little rise in temperature |
| 22 | 0 | 83 | |
| 23 | 0 | 98 | over curing |

Examples 24—26

The above experiments were repeated with di-t-butyl peroxy terephthalate (20), 2-methyl 2 cumylperoxy-5-ketotetrahydrofuran (22) and 3-tert. butylperoxy-3-phenylphthalide (23), but in such a way that these peroxides were added in an amount of only 2 or 3% by weight.

| Experiments with peroxide | wt. % peroxide | gel fraction (%) before radiation | gel fraction (%) after radiation |
|---|---|---|---|
| 20 | 2 | 0 | 65 |
| 22 | 3 | 0 | 60 |
| 23 | 2 | 0 | 73 |

These examples show that a satisfactory degree of cross-linking also can be obtained when use is made of small amounts of peroxide.

The use of small amounts of peroxide is, of course, attractive for economic reasons, but it has the additional advantage that in the cross-linked polymer only very little foreign substance is left, which has a particularly favourable effect on the electrical properties.

Example 27

On a two-roll mill, over a perod of 3 minutes and at 100°C, 3-t-butylperoxy-3-phenylphthalide (23) was mixed with EPDM rubber (Keltan 520, registered trade mark of DSM). The mixture contained 2% by weight of peroxide. Of this mixture 200 grammes were immediately afterwards exposed for 5 minutes to high frequency radiation of 2450 MHz (1000 W). The degree of cross-linking was determined in the same way as described above for polyethylene. After radiation the degree of cross-linking was found to be 85%. This experiment demonstrates that also when use is made of ethylene-propylene terpolymers instead of polyethylene favourable results may be obtained.

**Claims**

1. A process for cross-linking shaped non-polar synthetic resins by bringing them in a high frequency alternating current field in the presence of a polar peroxide, and in the absence of a polar auxiliary substance characterized in that as peroxide there is used a compound selected from the following group:

A: peresters of the general formula

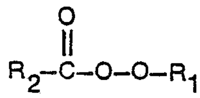 , 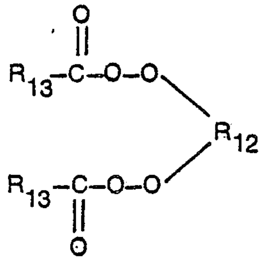 or 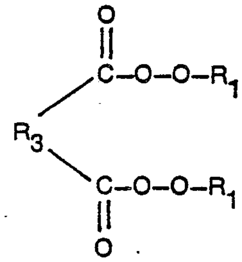

(1) (1a) (2)

B: perketals of the general formula

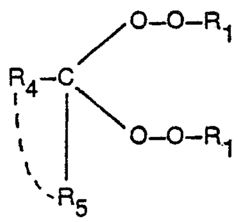 or 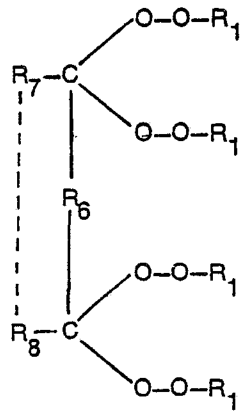

(3) (4)

C: peroxides of the general formula

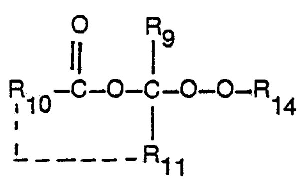

(5)

where the letters R have the following meaning:

$R_1$: a tertiary alkyl group having 4—12 carbon atoms;

$R_2$: a primary alkyl group having 1—12 carbon atoms, an aryl group having 7—12 carbon atoms and substituted with one or more methyl groups;

$R_3$: a primary alkylene group having 1—12 carbon atoms, a vinylidene group or a phenylene group;

$R_4$ and $R_5$: primary alkyl groups having 1—12 carbon atoms or when taken together and linked with the adjacent carbon atom they form part of a cyclopentamethylene group or cyclohexamethylene group which may or may not be methyl-substituted;

$R_6$: a diprimary alkylene group having 1—12 carbon atoms or linked with the two adjacent carbon atoms and in combination with $R_7$ and $R_8$ it forms part of a cyclopentamethylene group or cyclohexamethylene group which may or may not be methyl-substituted;

$R_7$ and $R_8$: primary alkyl groups having 1—12 carbon atoms or when taken together and linked with the respective adjacent carbon atoms and in combination with $R_6$ they form part of a cyclopentamethylene group or cyclohexamethylene group which may or may not be methyl-substituted;

$R_9$: a methyl or phenyl group;

$R_{10}$ and $R_{11}$: primary alkyl groups having 1—12 carbon atoms, cyclopentyl groups or cyclohexyl groups, aryl groups or when taken together and linked with the adjacent

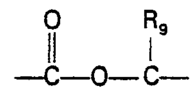

group they form part of a substituted or unsubstituted ring system having 5 or 6 atoms in the ring;

$R_{12}$: a ditert. alkylene group having 8—12 carbon atoms;

$R_{13}$: a primary alkyl group having 1—12 carbon atoms, a phenyl group or an aryl group having 7—12 carbon atoms and substituted with one or more methyl groups.

$R_{14}$: a tertiary alkyl group having 4—12 carbon atoms or a tertiary aralkyl group having 7—12 carbon atoms.

2. A process according to claim 1, characterized in that use is made of di-tert.-butylperoxyterephthalate (formula 8).

3. A process according to claim 1, characterized in that use is made of 2-methyl-2-cumylperoxy-5-ketotetrahydrofuran (formula 7).

4. A process according to claim 1, characterized in that use is made of 3-t-butylperoxy-3-phenyl phthalide (formula 6).

5. An electric object insulated with a crosslinked non-polar synthetic resin obtained according to the process of any one of the preceding claims.

## Revendications

1. Un procédé pour réticuler des résines synthétiques apolaires moulées par exposition à un champ de courant alternatif à haute fréquence, en présence d'un peroxyde polaire et en l'absence d'une substance auxiliaire polaire, caractérisé en ce que l'on utilise en tant que peroxyde un composé choisi dans le groupe suivant:

A. les peresters de formule générale

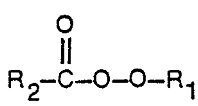 , 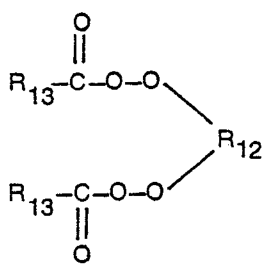 ou 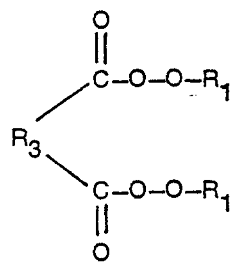

(1) (1a) (2)

B. les peracétals de formule générale

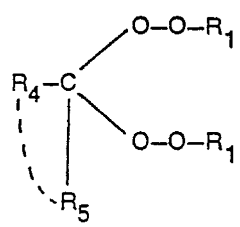 ou 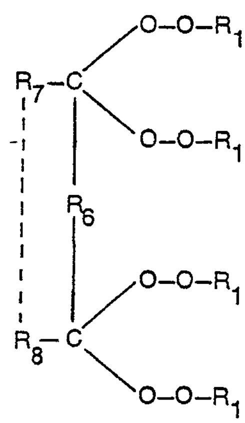

(3)

(4)

C. les peroxydes de formule générale

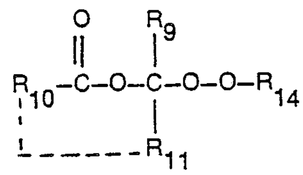

(5)

les lettres R ayant les significations suivantes:

$R_1$: un groupe alkyle tertiaire contenant de 4 à 12 atomes de carbone,

$R_2$: un groupe alkyle primaire contenant de 1 à 12 atomes de carbone, un groupe aryle contenant de 7 à 12 atomes de carbone et substitué par un ou plusieurs groupes méthyle,

$R_3$: un groupe alkylène primaire contenant de 1 à 12 atomes de carbone, un groupe vinylidène ou un groupe phénylène,

$R_4$ et $R_5$: des groupes alkyle primaires contenant de 1 à 12 atomes de carbone ou bien, pris ensemble et en liaison avec l'atome de carbone voisin, ils forment partie d'un groupe cyclopentaméthylène ou d'un groupe cyclohexaméthylène qui peut être substitué ou non par des groupes méthyle,

$R_6$: un groupe alkylène diprimaire contenant de 1 à 12 atomes de carbone ou, en liaison avec les deux atomes de carbone voisins et en combinaison avec $R_7$ et $R_8$, il forme partie d'un groupe cyclopentaméthylène ou d'un groupe cyclohexaméthylène qui peut ou non être substitué par des groupes méthyle,

$R_7$ et $R_8$: des groupes alkyle primaires contenant de 1 à 12 atomes de carbone ou bien, pris ensemble et en liaison avec les atomes de carbone voisins respectifs, en combinaison avec $R_6$, ils forment partie d'un groupe cyclopentaméthylène ou d'un groupe cyclohexaméthylène qui peut ou non être substitué par des groupes méthyle,

$R_9$: un groupe méthyle ou phényle,

$R_{10}$ et $R_{11}$: des groupes alkyle primaires contenant de 1 à 12 atomes de carbone, des groupes cyclopentyle ou des groupes cyclohexyle, des groupes aryle ou bien, pris ensemble et en liaison avec le groupe

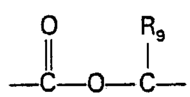

voisin, ils forment partie d'un système cyclique substitué ou non contenant 5 à 6 atomes dans le cycle;

$R_{12}$: un groupe alkylène ditertiaire contenant de 8 à 12 atomes de carbone,

$R_{13}$: un groupe alkyle primaire contenant de 1 à 12 atomes de carbone, un groupe phényle ou un groupe aryle contenant de 7 à 12 atomes de carbone et substitué par un ou plusieurs groupes méthyle,

$R_{14}$: un groupe alkyle tertiaire contenant de 4 à 12 atomes de carbone ou un groupe aralkyle tertiaire contenant de 7 à 12 atomes de carbone.

2. Un procédé selon la revendication 1, caractérisé en ce que l'on utilise le peroxytéréphtalate de di-tert.-butyle (formule 8).

3. Un procédé selon la revendication 1, caractérisé en ce que l'on utilise le 2-méthyl-2-cumylperoxy-5-céto-tétrahydrofuranne (formule 7).

4. Un procédé selon la revendication 1, caractérisé en ce que l'on utilise le 3-tert.-butylperoxy-3-phénylphtalide (formule 6).

5. Un objet électrique isolé par une résine synthétique apolaire réticulée obtenu par le procédé selon l'une quelconque des revendications qui précèdent.

**Patentansprüche**

1. Verfahren zum Vernetzen geformter nicht-polarer synthetischer Harze durch Einführen derselben in ein Hochfrequenzwechselstromfeld in Gegenwart eines polaren Peroxids und in Abwesenheit eines polaren Hilfsstoffes, dadurch gekennzeichnet, daß als Peroxid eine Verbindung aus der folgenden Gruppe eingesetzt wird:

A. Perester der allgemeinen Formel

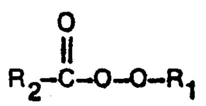 , 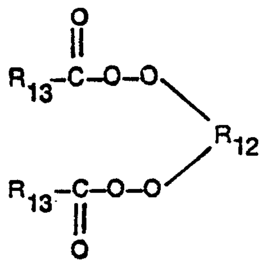 oder 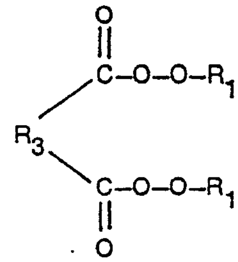

(1) (1a) (2)

B. Perketale der allgemeinen Formel

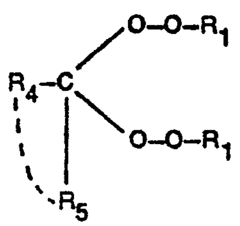 oder 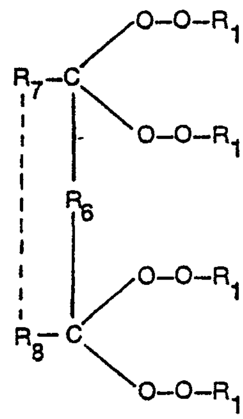

(3) (4)

C. Peroxide der allgemeinen Formel

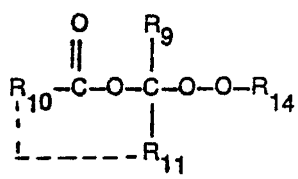

(5)

worin die Buchstaben R die folgende Bedeutung haben:

$R_1$: eine tertiäre Alkylgruppe mit 4—12 Kohlenstoffatomen;

$R_2$: eine primäre Alkylgruppe mit 1—12 Kohlenstoffatomen, eine Arylgruppe mit 7—12 Kohlenstoffatomen und substituiert mit einer oder mehreren Methylgruppen;

$R_3$: eine primäre Alkylengruppe mit 1—12 Kohlenstoffatomen, eine Vinylidengruppe oder eine Phenylengruppe;

$R_4$ und $R_5$: primäre Alkylgruppen mit 1—12 Kohlenstoffatomen, oder $R_4$ und $R_5$ bilden zusammengenommen und an das benachbarte Kohlenstoffatom gebunden, den Teil einer Cyclopentamethylengruppe oder Cyclohexamethylengruppe, die gegebenenfalls methylsubstituiert sein kann;

$R_6$: eine diprimäre Alkylengruppe mit 1—12 Kohlenstoffatomen, oder $R_6$ bildet zusammen mit den beiden benachbarten Kohlenstoffatomen und in Kombination mit $R_7$ und $R_8$ den Teil einer Cyclopentamethylengruppe oder Cyclohexamethylengruppe, die gegebenenfalls methylsubstituiert sein kann;

$R_7$ und $R_8$: primäre Alkylgruppen mit 1—12 Kohlenstoffatomen oder $R_7$ und $R_8$ bilden zusammengenommen und an die betreffenden benachbarten Kohlenstoffe gebunden in Kombination mit $R_6$ den Teil einer Cyclopentamethylengruppe oder Cyclohexamethylengruppe, die gegebenenfalls methylsubstituiert sein kann;

$R_9$: eine Methyl- oder Phenylgruppe;

$R_{10}$ und $R_{11}$: primäre Alkylgruppen mit 1—12 Kohlenstoffatomen, Cyclopentylgruppen oder Cyclohexylgruppen, Arylgruppen, oder $R_{10}$ und $R_{11}$ bilden zusammengenommen und an die benachbarte

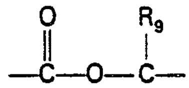

Gruppe gebunden den Teil eines substituierten Ringsystems mit 5 bis 6 Atomen im Ring;

$R_{12}$: eine ditertiäre Alkylengruppe mit 8—12 Kohlenstoffatomen;

$R_{13}$: eine primäre Alkylgruppe mit 1—12 Kohlenstoffatomen, eine Phenylgruppe oder eine Arylgruppe mit 7—12 Kohlenstoffatomen und substituiert mit einer oder mehreren Methylgruppen;

$R_{14}$ eine tertiäre Alkylgruppe mit 4—12 Kohlenstoffatomen oder eine tertiäre Aralkylgruppe mit 7—12 Kohlenstoffatomen.

2. Verfahren nach Anspruch 1, dadurch gekennzeichnet, daß Di-tert.-butylperoxy-terephthalat (Formel 8) eingesetzt wird.

3. Verfahren nach Anspruch 1, dadurch gekennzeichnet, daß 2-Methyl-2-cumylperoxy-5-keto-tetrahydrofuran (Formel 7) eingesetzt wird.

4. Verfahren nach Anspruch 1, dadurch gekennzeichnet, daß 3-tert.-Butylperoxy-3-phenylphthalid (Formel 6) eingesetzt wird.

5. Elektrischer Gegenstand, isoliert mit einem vernetzten nicht-polaren synthetischen Harz, das nach dem Verfahren gemäß einem der vorhergehenden Ansprüche erhalten wurde.

(1)

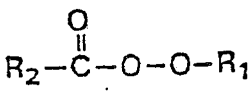

(1a)

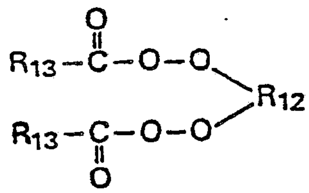

(2)

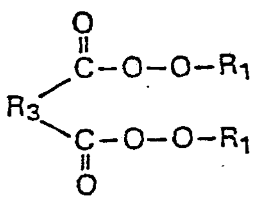

(3)

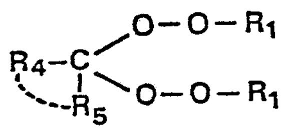

(4)

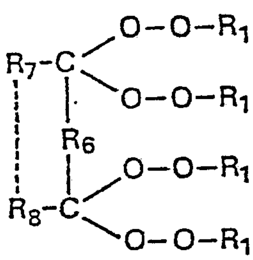

(5)

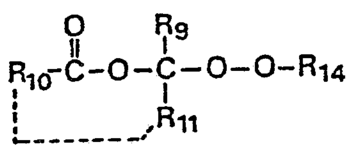

(6)

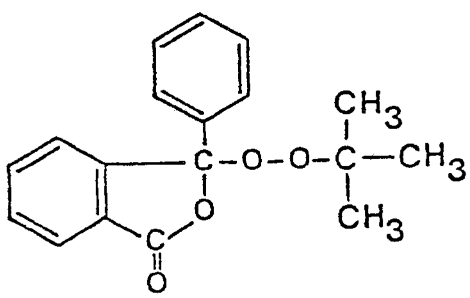

(7)

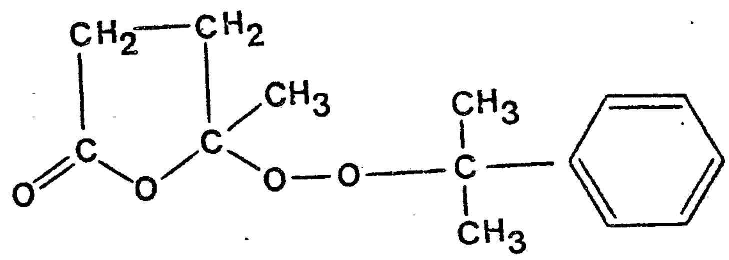

(8)